# EUROPEAN PATENT APPLICATION

(11) **EP 1 982 592 A1**
(43) Date of publication of application: **22.10.2008**
(21) Application number: 07707242.9
(22) Date of filing: 23.01.2007
(51) Int. Cl.: A01N 37/08, A01G 7/06, A01N 25/04, A01N 45/00, A01P 21/00

(54) **METHOD OF PROMOTING ENLARGEMENT GROWTH OF AGRICULTURAL OR HORTICULTURAL CROP**

(30) Priority: 27.01.2006 JP 2006019150
(71) Applicant: National University Corporation Tottori University, Tottori-shi Tottori 680-8550 (JP); KUMIAI CHEMICAL INDUSTRY CO., LTD., Taito-ku Tokyo 110-8782 (JP)
(72) Inventor: ITAI, Akihiro Faculty of Agriculture National University Corporation Tottori University, Tottori-shi, Tottori 680-8550 (JP); HONDA, Hisashi, Kumiai Chemical Industry Co., Ltd., Tokyo 110-8782 (JP)
(74) Representative: Uchida, Kenji
(86) International application number: PCT/JP2007/050979
(87) International publication number: WO 2007/086372

(57) **Abstract**

For developing a system of promoting the enlargement growth of agricultural and horticultural crops selected from fruits, fruit vegetables and flowers, an agent of enlarging the enlargement growth of agricultural and horticultural crops is prepared, the agent comprising gibberellin and a cyclohexane derivative of the following general formula (I): 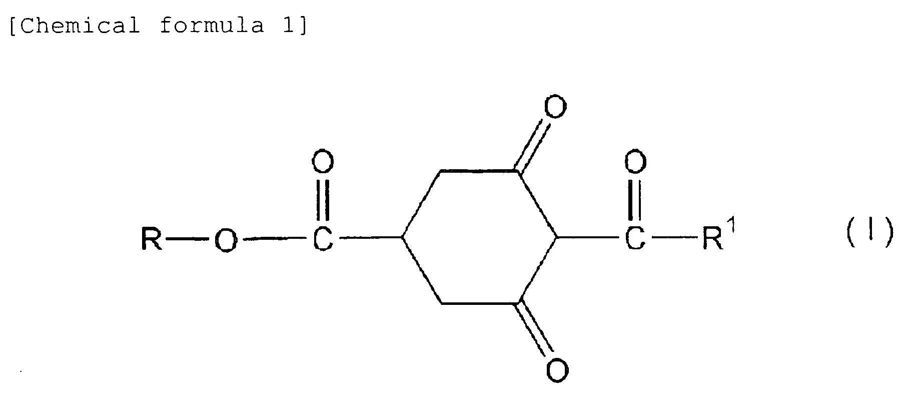 [in the formula, R represents hydrogen, C₁-C₆ alkyl group, C₁-C₆ haloalkyl group, or phenyl group (which may optionally be substituted) ; R1 represents hydrogen, C₁-C₆ alkyl group, C₃-C₆ cycloalkyl group, or benzyl group (which may optionally be substituted)], or a salt thereof (for example, a calcium salt) as the active ingredients.

## Description

### Technical Field

The present invention relates to the promotion of the enlargement growth of agricultural and horticultural crop. More specifically, the invention relates to a novel system for promoting the growth of fruits, fruit vegetables and flowers by using gibberellin in combination with a specific cyclohexane derivative to enlarge the fruits, fruit vegetables and flowers.

### Background of the Invention

It is one of the major problems in the industry to design the increase of the yield of agricultural and horticultural crops such as fruits, fruit vegetables, and flowers by enlarging or promoting the enlargement of the crops. So as to overcome the problem, attention has been focused on gibberellin as a phytohormone. Gibberellin is now practically used partially (see non-patent reference 1)

So as to overcome the problem in accordance with the invention after intensive investigations, meanwhile, attention was focused on a combined use of chemical agents from the standpoint that the intended object might not be attained with a single use of a chemical agent. Thus, various chemical agents were screened with attention focused on a combined use of chemical agents. By outwardly applying a specific cyclohexane derivative in combination with gibberellin to agricultural and horticultural crops, a significant promoting action of the enlargement growth was first found. Thus, the invention has been attained. The cyclohexane derivative does not have an action of promoting the growth of plants but has an action of suppressing the growth of plants (see patent reference 1). The reference never includes any description about any synergistic promotion of the enlargement growth of agricultural and horticultural crops with the outward application of the cyclohexane derivative in combination with gibberellin via spraying, dipping, paste treatment or any other outward approaches using both of them.
Patent reference 1: JP-B-4-29659
Non-patent reference 1: BIG CHEMICAL DICTIONARY VOL.2 (Kagaku Dai-jiten 2) (condensed edition), Issued in September 10, 1967, by Kyoritsu Shuppan, see in particular the section GIBBERELLIN.

### Disclosure of the Invention

### Problem that the Invention is to Solve

The invention has been done so as to develop a new excellent promotion system of the enlargement growth of agricultural and horticultural crops so as to increase the yield of agricultural and horticultural crops to make contributions to the agricultural business.

### Means for Solving the Problem

The present inventors made intensive investigations so as to attain the object described above. The inventors first found that a far greater effect was obtained from the combined use of gibberellin with a specific cyclohexane derivative than the conventionally known effects. Thus, the invention has been achieved.

The cyclohexane derivative is a novel compound successfully developed previously by the present applicant, and has an action of regulating plant growth. However, the action is not an action of promoting the growth but a totally adverse action of suppressing the growth (see patent reference 1) . Therefore, it was not expected that even the application of the cyclohexane derivative in combination with gibberellin to agricultural and horticultural crops could enlarge and grow agricultural and horticultural crops. In a totally inversed manner to the expectation, however, the applicant first found that the combined use of both of them for outward application to agricultural and horticultural crops in practice could produce a far greater effect than the effect of a single application of gibberellin. Based on the novel useful finding, additional investigations were made. Thus, the invention has been achieved.

As described above, the invention is so characteristic in that a prominent effect far above the expectation in the industry can be exhibited and that the effect is even greater. Therefore, the invention satisfies the patentability requirement.

### Advantage of the Invention

In accordance with the invention, remarkable effects of promoting the enlargement growth of agricultural and horticultural crops such as fruits, fruit vegetables and flowers can be exerted. The effects are far above the effect with the single use of gibberellin. Therefore, the invention can make contributions to agricultural farmers and horticultural farmers via fruit enlargement to increase the yield of agricultural and horticultural crops or to shorten the period until harvest.

### Best Mode for Carrying out the Invention

The invention relates to a method of promoting the enlargement growth of agricultural and horticultural crops, characterized in that the method comprises treating agricultural and horticultural crops by gibberellin together with a specific cyclohexane derivative or a salt thereof, or by their mixture, as well as an agent therefor.

The cyclohexane derivative for use in combination with gibberellin is represented by the formula (I), and has a structure of the following chemical formula 4.

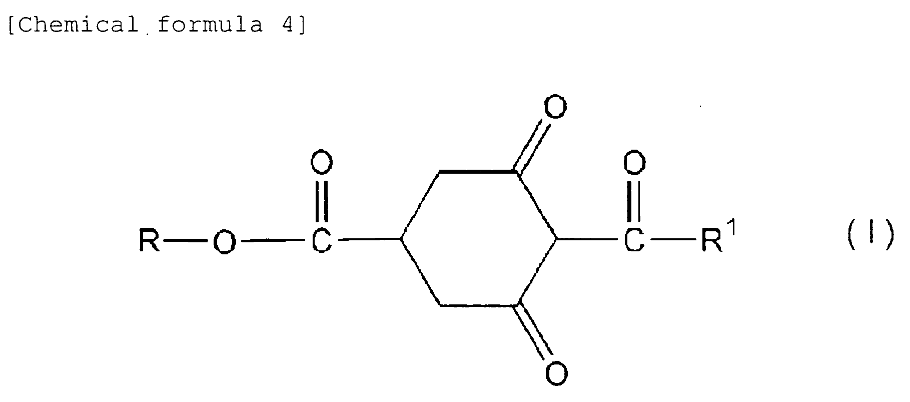

(in the formula, R represents hydrogen, C₁-C₆ alkyl group, C₁-C₆ haloalkyl group, or phenyl group (which may optionally be substituted) ; R¹ represents hydrogen, C₁-C₆ alkyl group, C₃-C₆ cycloalkyl group, or benzyl group (which may optionally be substituted) ; or the salt thereof represents alkali metal salt or alkali earth metal salt thereof.)

As the cyclohexane derivative (I), one type or two or more types of the compound may satisfactorily be used. A preferable example of the compound is for example a compound of the formula (I) where R represents hydrogen, or C₁-C₆ alkyl group; R1 represents C₁-C₆ alkyl group or C₃-C₆ cycloalkyl group; and a salt thereof represents a salt with alkali metal (sodium, potassium, and the like), alkali earth metal (calcium, magnesium, and the like), aluminium, copper, nickel, manganese, cobalt, zinc, iron or silver, preferably representing a salt with calcium.

The cyclohexane derivative (I) can be produced as follows according to for example JP-B-4-29659 (Chemical formula 5).
Specifically, the compound (VI) can be produced by reacting the compound (IV) or the compound (V) (in the formula, M¹ represents an alkali metal atom; and R represents the same meanings as described above) with an acid chloride (R1COCl: R1 represents the same meanings as described above) in the presence or absence of γ-picoline and in the presence or absence of a base in the presence of a solvent within a temperature range of -20°C to the boiling point of the solvent, preferably at room temperature or lower, for 10 minutes to 7 hours.
The base includes for example organic bases such as trimethylamine, triethylamine, tripropylamine, tributylamine, pyridine, and 4-N, N-dimethylaminopyridine and inorganic bases such as sodium hydroxide, potassium hydroxide, sodium carbonate, potassium carbonate and sodium hydrogen carbonate.

The compound (I) can be produced by a reaction of the compound (VI) in the presence of a catalyst and a solvent within a temperature range of room temperature to the boiling point of the solvent for one to 10 hours.
Herein, the catalyst includes pyridine derivatives such as 4-N, N-dimethylaminopyridine, 4-N, N-diethylaminopyridine and 4-pyrrolidinoaminopyridine, as well as N-alkylimidazole derivatives such as N-ethylimidazole.

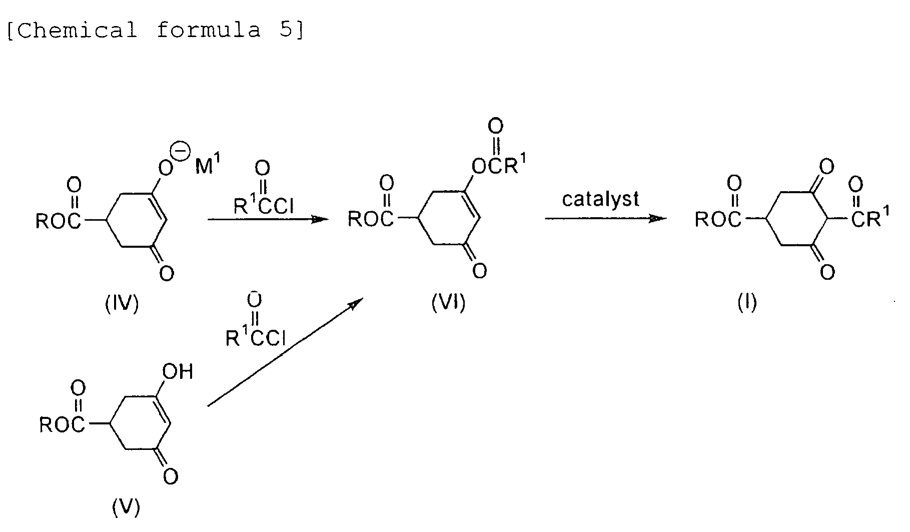

Additionally, any commercially available such products may be used satisfactorily. For example, trinexapac ethyl (a compound of the formula (I) where R represents ethyl group and R1 represents cyclopropyl group) as well as prohexadione and prohexadione calcium represented by the chemical formulas 6 and 7, respectively (of the formulas (II) and (III), respectively: these are all commercially available; especially, the prohexadione calcium salt is commercially available under the trade name of VIVIFUL) may appropriately be used.

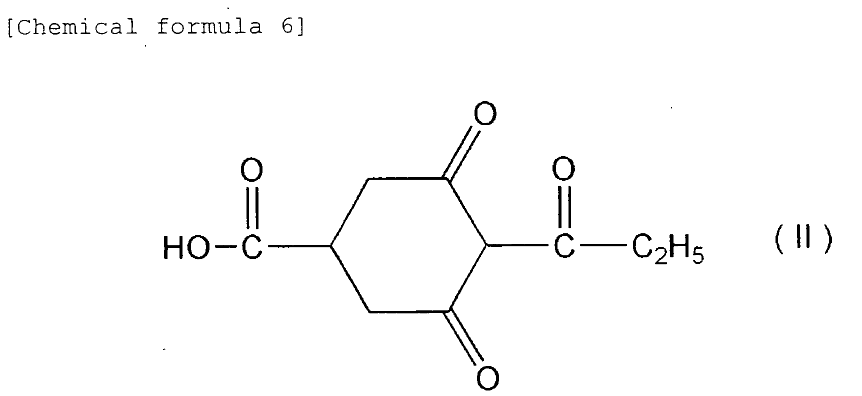

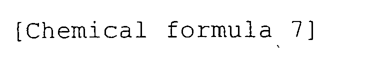

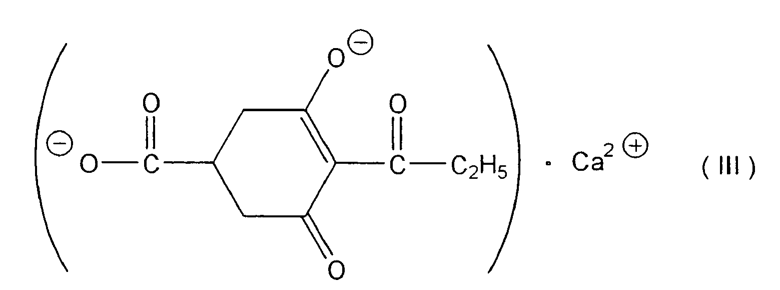

Any gibberellin may be used as long as the gibberellin has an action for plant growth. From the standpoint of the effect, in particular, gibberellin A₁ (GA₁), gibberellin A₃ (GA₃), gibberellin A₄ (GA₄), and gibberellin A₇ (GA₇) may be used singly or two types or more thereof may be used in combination, preferably. Since gibberellin is commercially available in formulations of a water-soluble formulation, a liquid formulation, a powdery formulation, a paste formulation, water-soluble tablets and water-soluble granules, these commercially available products may appropriately be used.

The contents of the cyclohexane derivative and gibberellin in the agent of promoting the enlargement growth in accordance with the invention may appropriately be defined for a subject agricultural and horticultural crop, the mode for use, the method for use and the timing for use. In case of spraying, generally, the cyclohexane derivative is contained at 0.01 to 1, 000 ppm, preferably 0.1 to 100 ppm. In case of pastes with lanolin and the like, generally, the cyclohexane derivative is contained at 0.01 to 30 %, preferably 0.1 to 10 %. In case of spraying, gibberellin is generally contained at 1 to 10,000 ppm, preferably 10 to 1,000 ppm. Additionally in case of a paste with lanolin and the like, gibberellin is contained at 0.01 to 30 %, preferably 0.1 to 10 %.

The agent of promoting the enlargement growth in accordance with the invention may contain auxiliary agents such as carriers, emulsifiers, dispersants, spreading agents, moistening agents, stickers, and disintegrators for routine use, if necessary, in addition to the components described above, to be formulated into various formulations such as wettable powders, emulsifiable concentrates, dusts, granules, and pastes.

The auxiliary agents herein used include those described below. The liquid carriers include for example water, alcohols such as ethanol and methanol, ketones such as acetone, and esters such as ethyl acetate. As the emulsifiers or the dispersants, generally, surfactants are used, including for example anionic surfactants, cationic surfactants and amphoteric surfactants, such as sodium higher alcohol sulfate, stearyl trimethyl ammonium chloride, polyoxyethylene alkyl phenyl ether and lauryl betaine. In case of pastes, lanolin and Vaseline are used.

By the method of promoting the enlargement growth in accordance with the invention via spraying treatment, generally, the cyclohexane derivative and gibberellin are sprayed on a tree or each fruit at an extent such that the whole tree or each fruit might be wetted uniformly at a stage of fruit enlargement or at a start of fruit coloring, although it depends on the kind of crop, the growth stage, the application method or the application timing. In case of a paste treatment, the paste is applied on a flower peduncle or stem on the upper part of fruit in the same timing as described above.

In case of a treatment with a paste with 2.7 % gibberellin and with a paste with a 10 % prohexadione calcium salt (lanolin at 90 %), the amount of the paste is about 0.0001 to 1.0 g, preferably about 0.001 to 0.5 g, more preferably about 0.003 to 0.3 g for a pear peduncle . But these are tentative standards. The amount can appropriately be raised or reduced, depending on the need. In case of an application method except paste treatments, an appropriate amount therefor may satisfactorily be defined with reference to the amount of the paste treatment.

In case that an agent of promoting the enlargement growth in accordance with the invention is to be applied, the agent is preliminarily prepared by mixing together gibberellin and a cyclohexane derivative as the active ingredients (with no specific limitation, the mixing ratio is for example 1:99 to 99:1, preferably 10:90 to 90:10; generally, the agent is a mixture of equal amounts of them) for applying the mixture composition. In other words, the method comprises applying both of the active ingredients simultaneously.

Even in case of the simultaneous application, both of the active ingredients are separately prepared with no preliminary mixing, for simultaneous application of them. If desired, satisfactorily, one of the ingredients is applied; with a time interval or after several days, the other ingredient is applied. In this case, the order of the applications may be inversed or the applications may be repeated several times. The same is true with the simultaneous application. If desired, the applications may be repeated at a number of times as needed.

The crops to which the invention is applicable include but are not limited to fruits to be harvested, fruit vegetables and flowers. Fruits include, for example, crops belong to Rosaceae (pear, European pear, apple, cherry, peach, plum, prune, nectarine, Japanese apricot, apricot, loquat, strawberry, etc.), grape, persimmon, citrus fruits [Unshiu mikan (Citrus unshiu), Iyokan (Citrus iyo), Summer mandarin orange, Ama-natsu (Citrus natsudaidai Hayata f. Kawanonatsudaidai), daidai (Citrus sinennsis var. daidai), sudachi (Citrus sudachi), orange, buntan (Citrus maxima), zabon (a subtype of Citrus maxima), dekopon (a subtype of Citrus unshiu), hassaku , etc.], kiwi, mango, papaya, pineapple, coconut, and coffee.

The fruit vegetables include, for example, cucumber, pumpkin, watermelon, melon, prince melon, gourd, tomato, eggplant, sweet pepper, pepper, okra, bitter gourd, string beans, broad bean, pea, adzuki bean, black-eyed pea, soybeans in the pod, soybean, and corn. The flowers include for example tulip, cyclamen, primula, petunia, miyako wasure (Gymnaster savatieri), summer chrysanthemum, shiran (Bletilla striata Reichb. fil.), and western rhododendron.

### Examples

Examples of the invention are now described below. However, the invention is never limited to these Examples.

### Example 1

For a subject Japanese pear (Hosui), a fruit enlargement test was done following the experimental summary described below. Herein, the treatment with a 2.7 % gibberellin paste was performed by using a product manufactured by Kyowa Hakko Kogyo Co., Ltd. (Gibberellin Kyowa Paste (2.7 %)). For the treatment with a prohexadione calcium salt paste at 1 % or 10 %, the prohexadione calcium salt manufactured by Kumiai Chemical Industry Co., Ltd. (the trade name: Viviful) was used.

### Experimental summary

### (1) Japanese pear

Material: Fruit of Japanese pear "Hosui"
Fully bloomed on April 22, 2005; starting the treatments on May 25, 2005; harvested on September 6, 2005: 45 fruits per treatment lot.

### Treatment lots

C: Cont (control lot)
G: treatment with 2.7 % gibberellin paste
Y: treatment with 1 % prohexadione calcium salt paste (lanolin at 99 %)
P: treatment with 10 % prohexadione calcium salt paste (lanolin at 90 %)
GY: treatment with 2.7 % gibberellin paste + treatment with 1 % prohexadione calcium salt paste (lanolin at 99 %)
GP: treatment with 2.7 % gibberellin paste + treatment with 10 % prohexadione calcium salt paste (lanolin at 90 %)
The paste treatments were carried out by applying the pastes on pear stalks (about 0.03 g per one fruit).

### Results

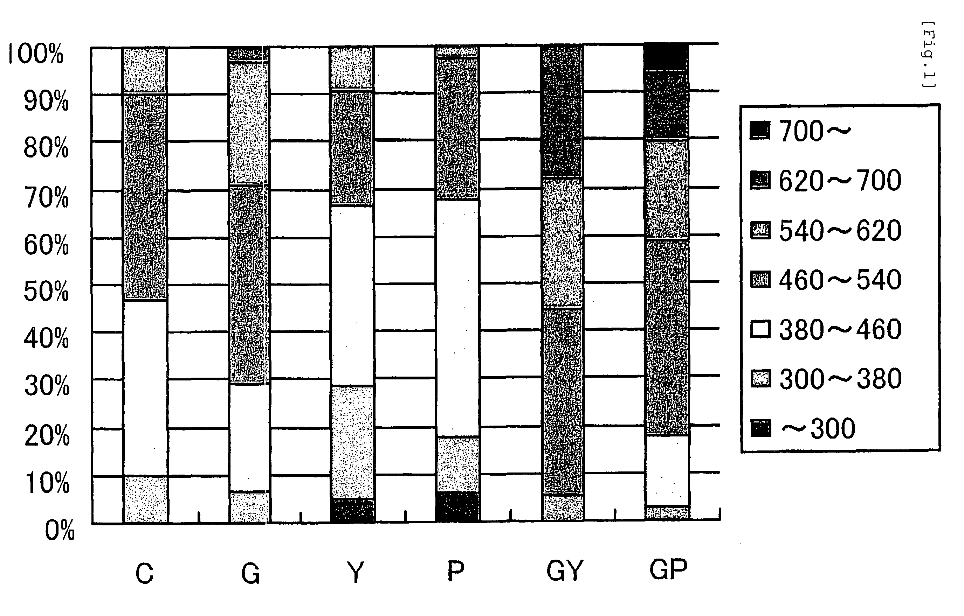

The results are shown in Table 1 and Fig. 1 (a distribution chart of fruit weights). In Table 1, the fruit weights are shown in g; the crosswise diameter and longitudinal diameter are shown in mm; "L", "a" and "b" are values of fruits as measured with a color difference meter, where "L" expresses lightness; "a" and "b" express color. The sugar level is expressed with a reading of refractometer, while the acidity is expressed by pH. Statistical analysis was done by the Tukey's HSD test (p = 0.05). Significant difference is observed between different alphabets.

**Table 1**

| | Fruit weight (g) | | Crosswise diameter (mm) | | Longitudinal diameter (mm) | | L | | a | | b | | Sugar level | | Acidity (pH) | |
|---|---|---|---|---|---|---|---|---|---|---|---|---|---|---|---|---|
| Mean of C | 459.7 | cd | 97.9 | bc | 85.7 | b | 55.09 | a | 5.84 | | 38.46 | a | 13.4 | | 4.9 | a |
| Standard error | 11.06 | | 0.84 | | 0.85 | | 0.26 | | 0.42 | | 0.29 | | 0.16 | | 0.01 | |
| Mean of G | 490.0 | bc | 100.7 | ab | 87.8 | ab | 52.55 | b | 7.01 | | 34.52 | b | 13.1 | | 4.8 | b |
| Standard error | 13.39 | | 1.07 | | 0.87 | | 0.69 | | 0.69 | | 1.42 | | 0.22 | | 0.03 | |
| Mean of Y | 424.2 | d | 95.5 | c | 82.3 | c | 54.57 | ab | 6.83 | | 38.06 | ab | 13.7 | | 4.7 | b |
| Standard error | 20.33 | | 1.68 | | 1.48 | | 0.55 | | 0.47 | | 0.60 | | 0.16 | | 0.02 | |
| Mean of P | 430.7 | d | 95.7 | c | 83.9 | c | 54.86 | a | 7.02 | | 38.89 | a | 13.4 | | 4.7 | b |
| Standard error | 12.42 | | 0.94 | | 1.13 | | 0.40 | | 0.62 | | 0.48 | | 0.15 | | 0.02 | |
| Mean of GY | 552.5 | a | 104.3 | a | 91.5 | a | 53.84 | ab | 7.25 | | 36.82 | ab | 13.1 | | 4.7 | b |
| Standard error | 19.55 | | 1.30 | | 1.45 | | 0.63 | | 0.64 | | 0.83 | | 0.22 | | 0.03 | |
| Mean of GP | 539.6 | ab | 104.5 | a | 90.0 | a | 53.84 | ab | 7.90 | | 37.80 | ab | 13.3 | | 4.8 | b |
| Standard error | 15.02 | | 1.06 | | 0.82 | | 0.48 | | 0.60 | | 0.65 | | 0.15 | | 0.03 | |
| | | | | | | | | | n.s. | | | | n.s. | | | |

As apparently shown in the results in Table 1, GY namely the treatment with the 2.7 % gibberellin paste + the treatment with the 1% prohexadione calcium salt paste (lanolin at 99 %) could produce fruits clearly larger than fruits in the control lot C and, furthermore, about 60g larger than fruits in the G lot with a single treatment with the 2.7 % gibberellin paste, at a significant difference under observation. As shown in Fig. 1, further, ultra-large fruits exceeding about 700 g could be harvested by the treatment with a mixture of gibberellin and prohexadione calcium salt.

### Example 2

Using European pear (La France) as a subject, a fruit enlargement test was done in a similar manner to Example 1 following the experimental summary described below.

### Experimental summary

### (2) La France

Material: European pear fruit "La France"
Fully bloomed on April 25, 2005; starting the treatments on June 7, 2005; harvested on October 11, 2005: 25 fruits per treatment lot.

### Treatment lots

C: Cont (control lot)
G: treatment with 2.7 % gibberellin paste
Y: treatment with 1 % prohexadione calcium salt paste (lanolin at 99 %)
GY: treatment with 2.7 % gibberellin paste + treatment with 1 % prohexadione calcium salt paste (lanolin at 99 %)
The treatment methods were the same as described for Hosui.

### Results

The results are shown below in Table 2. Statistical analysis was done by the Tukey's HSD test (p = 0.05). Significant difference is observed between different alphabets. Consequently, no significant difference was observed in terms of any of fruit weight, crosswise diameter and longitudinal diameter between the G lot treated singly with gibberellin and the control lot C. However, significant difference was observed between the GY lot treated with a mixture of gibberellin + the prohexadione calcium salt and the control lot C. Even for the fruit La France, a remarkable effect of promoting the enlargement growth was also verified in the treatment lot with the mixture, in a similar manner to the case of Hosui.

**Table 2**

| | Fruit weight (g) | | Crosswise diameter (mm) | | Longitudinal diameter (mm) | | L | | a | | b | | Sugar level | | Acidity (pH) | |
|---|---|---|---|---|---|---|---|---|---|---|---|---|---|---|---|---|
| Mean of C | 298.4 | b | 86.2 | bc | 82.2 | b | 63.42 | | -12.29 | | 48.88 | ab | 13.5 | ab | 4.4 | |
| Standard error | 8.1 | | 0.9 | | 1.3 | | 0.85 | | 0.59 | | 0.56 | | 0.20 | | 0.03 | |
| Mean of G | 324.0 | ab | 88.3 | ab | 86.5 | ab | 62.37 | | -12.52 | | 47.50 | a | 14.0 | a | 4.3 | |
| Standard error | 10.3 | | 1.0 | | 1.0 | | 1.14 | | 0.55 | | 0.52 | | 0.17 | | 0.03 | |
| Mean of Y | 289.4 | b | 84.1 | c | 82.3 | b | 61.94 | | -11.23 | | 48.41 | b | 13.2 | | 4.3 | |
| Standard error | 7.9 | | 0.9 | | 1.2 | | 0.63 | | 0.50 | | 0.65 | | 0.16 | | 0.02 | |
| Mean of GY | 351.7 | a | 90.6 | a | 89.6 | a | 63.18 | | -12.46 | | 45.85 | a | 14.1 | a | 4.3 | |
| Standard error | 9.1 | | 1.0 | | 1.1 | | 1.01 | | 0.61 | | 0.49 | | 0.20 | | 0.02 | |
| | | | | | | | n.s. | | n.s. | | | | | | n.s. | |

### Example 3

Using grape (species: "Italia") as a subject, a fruit enlargement test was done following the experimental summary described below. The test was carried out with 7 replication. Fifteen days after the full bloom, grape bunches were dipped in a chemical solution diluted to a predetermined concentration. The treated grape bunches were dried in air and grown as they were, until the bunches were harvested 43 days after the treatment to examine the bunch weight and the total number of grape berries. Five berries were randomly selected from each grape bunch of 5 replication among the test lots, for measuring the sugar level with a hand-held refracto-sugar meter manufactured by ATAGO CO.,LTD (Type number: N1). Additionally, a drug substance of gibberellin in powder (98 % purity) was used as the gibberellin, while as the prohexadione calcium salt, a 27.5 % formulation (the trade name: Viviful) was used, and as the trinexapac ethyl, a 25 % formulation thereof (the trade name: Moddus) was used.

### Experimental summary

### (3) Grape

### Material: Grape bunch "Italia"

Fully bloomed on September 21, 2006; starting the treatments on October 6, 2006; harvested on December 18, 2006: 7 bunches per one treatment lot.

### Treatment lots

C: Cont (control lot)
G: dipping treatment in gibberellin (24.5 ppm)
PCA: dipping treatment in prohexadione calcium salt (20 ppm, 100 ppm)
GPCA: dipping treatment in gibberellin and prohexadione calcium salt (24.5 and 20 ppm, respectively or 24.5 ppm and 100 ppm, respectively)
TR: dipping treatment in trinexapac ethyl (20 ppm, 100 ppm) G + TR: dipping treatment in gibberellin and trinexapac ethyl (24.5 ppm and 20 ppm, respectively or 24.5 ppm and 100 ppm, respectively).

### Results

The results are shown below in the tables. As the bunch weight and the total bunch number, the mean value of 7 replication is shown in Table 3. Additionally, the mean of one berry weight (bunch weight/total berry number) as well as the sugar level is shown in Table 4. Herein, statistical analysis was done by the Tukey's HSD test (p = 0.05). Significant difference is observed between different alphabets.

**Table 3**

| Chemical name | | Chemical amount (ppm) | Mean bunch weight | | | Mean berry number/bunch (in number) | | |
|---|---|---|---|---|---|---|---|---|
| | | | (g) | | Standard error | number | | Standard error |
| 1 | No treatment lot | | 418.6 | cd | 33.7 | 62.1 | a | 5.9 |
| 2 | G | 24.5 | 584.3 | bcd | 51.9 | 74.3 | a | 6.6 |
| 3 | PCA | 20 | 452.9 | cd | 44.3 | 64.0 | a | 4.0 |
| 4 | PCA | 100 | 390.0 | d | 15.0 | 61.1 | a | 1.6 |
| 5 | G + PCA | 24.5 + 20 | 620.0 | abc | 18.9 | 62.6 | a | 2.8 |
| 6 | G + PCA | 24.5 + 100 | 767.1 | ab | 57.5 | 76.9 | a | 4.0 |
| 7 | TR | 20 | 487.1 | cd | 36.6 | 62.1 | a | 5.9 |
| 8 | TR | 100 | 474.3 | cd | 22.0 | 71.4 | a | 2.4 |
| 9 | G + TR | 24.5 + 20 | 608.6 | a-d | 18.3 | 64.0 | a | 3.4 |
| 10 | G + TR | 24.5 + 100 | 834.3 | a | 111.9 | 82.0 | a | 12.5 |

**Table 4**

| Chemical name | | Chemical amount (ppm) | One berry weight (g) | | | Sugar level (%) | | |
|---|---|---|---|---|---|---|---|---|
| | | | (g) | | Standard error | (%) | | Standard error |
| 1 | No treatment lot | | 6.8 | c | 0.3 | 10.4 | a | 1.3 |
| 2 | G | 24.5 | 7.9 | bc | 0.2 | 11.8 | a | 1.0 |
| 3 | PCA | 20 | 7.3 | c | 0.8 | 10.8 | a | 0.6 |
| 4 | PCA | 100 | 6.4 | c | 0.2 | 11.2 | a | 0.9 |
| 5 | G + PCA | 24.5 + 20 | 10.0 | a | 0.4 | 11.6 | a | 1.2 |
| 6 | G + PCA | 24.5 + 100 | 9.9 | a | 0.4 | 13.2 | a | 1.1 |
| 7 | TR | 20 | 7.9 | bc | 0.3 | 11.0 | a | 1.4 |
| 8 | TR | 100 | 6.7 | c | 0.3 | 10.6 | a | 0.5 |
| 9 | G + TR | .24.5+20 | 9.6 | ab | 0.5 | 8.7 | a | 0.6 |
| 10 | G + TR | 24.5 + 100 | 10.5 | a | 0.5 | 11.2 | a | 1.5 |

As shown in Tables 3 and 4, the dipping treatments in a mixture of G + PCA (gibberellin + prohexadione calcium salt) and a mixture of G + TR (gibberellin + trinexapac ethyl) tended to increase the bunch weight while a significant difference was observed in the weight per one berry, compared with the common practice of the dipping treatment G in gibberellin. Even when the weight per one berry was increased, no influence was observed on the sugar level. Compared with the common practice of the dipping treatment in a single agent of gibberellin, in other words, it was verified that the dipping treatments in a mixture of G + PCA (gibberellin + prohexadione calcium salt) and a mixture of G + TR (gibberellin + trinexapac ethyl) greatly enlarged the fruit without any deterioration of grape quality.

### Brief Description of the Drawings

[Fig.1] Fig.1 depicts a distribution chart of fruit weight.

## Claims

1. An agent of promoting the enlargement growth of agricultural and horticultural crops **characterized in that** the agent comprises gibberellin and a cyclohexane derivative of the formula (I) as represented by the following chemical formula 1 or a salt thereof as the active ingredients: 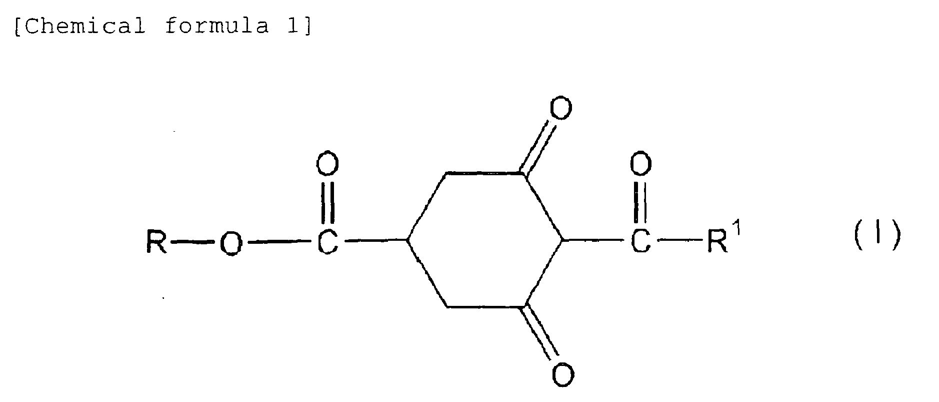 (in the formula, R represents hydrogen, C₁-C₆ alkyl group, C₁-C₆ haloalkyl group, or phenyl group (which may optionally be substituted) ; R1 represents hydrogen, C₁-C₆ alkyl group, C₃-C₆ cycloalkyl group, or benzyl group (which may optionally be substituted) ; or the salt thereof represents alkali metal salt or alkali earth metal salt thereof.)

2. An agent according to claim 1, **characterized in that** the cyclohexane derivative is a compound of the formula (I) where R represents hydrogen or C₁-C₆ alkyl group; R1 represents C₁-C₆ alkyl group or C₃-C₆ cycloalkyl group; and the salt thereof is a calcium salt thereof.

3. An agent according to claim 2, **characterized in that** the cyclohexane derivative is a compound of the formula (II) as represented by the following chemical formula 2 or a calcium salt compound of the formula (III) as represented by the following chemical formula 3:

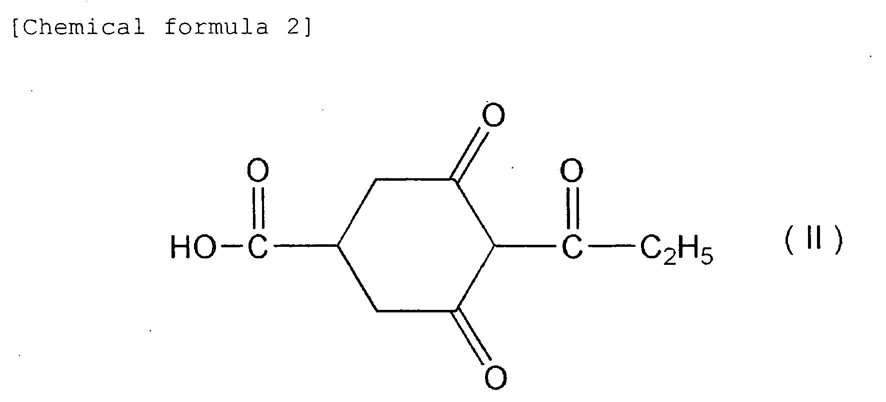

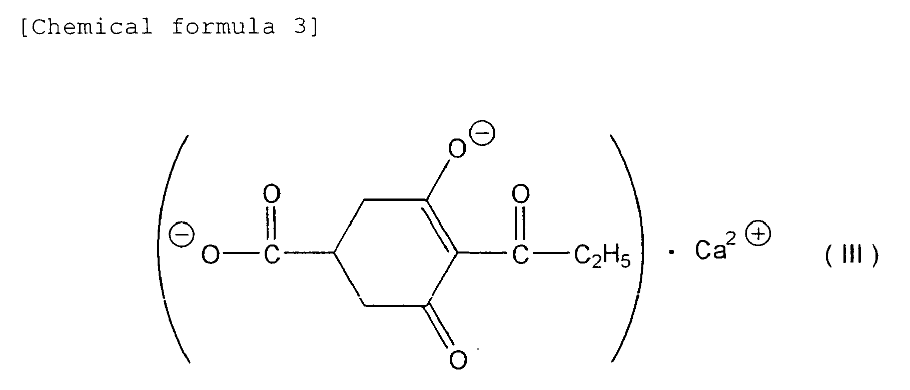

4. An agent according to any one of claims 1 through 3, **characterized in that** the agent of promoting the enlargement growth of agricultural and horticultural crops is an agent for enlarging fruits, fruit vegetables or flowers.

5. An agent according to any one of claims 1 through 4, **characterized in that** the agent comprises a mixture of gibberellin and a cyclohexane derivative (including salts thereof) of the formula (I) or a combination of single uses of both thereof.

6. A method of promoting the enlargement growth of agricultural and horticultural crops, **characterized in that** the method comprises applying both gibberellin and a cyclohexane derivative (including salts thereof) of the formula (I) simultaneously or singly in a separate manner or applying both separately at an interval.

7. A method according to claim 6, **characterized in that** the method comprises applying gibberellin and a cyclohexane derivative (including salts thereof) of the formula (I) via spraying, dipping or paste treatment.

8. A method according to claim 7, **characterized in that** the method comprises applying gibberellin and a cyclohexane derivative (including salts thereof) of the formula (I) in a paste form to fruit peduncle.

9. A method according to any one of claims 6 through 8, where the agricultural and horticultural crops are crops belong to Rosaceae.

10. A method according to any one of claims 6 through 9, **characterized in that** the method is for enlarging the fruit of pear or European pear.

11. A method according to any one of claims 6 through 8, **characterized in that** the method is for enlarging the fruit of grape.

12. A method according to any one of claims 6 through 8, **characterized in that** the method is for enlarging citrus fruits.
